# EUROPÄISCHE PATENTANMELDUNG

(11) **EP 2 586 695 A1**
(43) Veröffentlichungstag der Anmeldung: **01.05.2013**
(21) Anmeldenummer: 12189740.9
(22) Anmeldetag: 24.10.2012
(51) Int. Cl.: B63B 17/04, B63G 8/04

(54) **Unterseeboot**

(30) Priorität: 31.10.2011 DE 102011085508
(71) Anmelder: ThyssenKrupp Marine Systems GmbH, 24143 Kiel (DE)
(72) Erfinder: Heinze, Dipl.-Ing Bodo, 24235 Wendtorf (DE)
(74) Vertreter: Patentanwälte Vollmann & Hemmer

(57) **Zusammenfassung**

Ein Unterseeboot, bei dem es sich vorzugsweise um ein militärisches Unterseeboot handelt, weist ein oberhalb eines Druckkörpers angeordnetes Oberdeck (4) und mindestens einen an dem Oberdeck (4) lösbar befestigbaren Geländerpfosten (22) eines Geländers auf. Oberdeckseitig ist mindestens eine Führungsschiene (20) vorgesehen, in der der Geländerpfosten (22) einführbar und festlegbar ist.

## Beschreibung

Die Erfindung betrifft ein Unterseeboot mit den im Oberbegriff von Anspruch 1 angegebenen Merkmalen.

Militärische Unterseeboote weisen in der Regel an ihrer Oberseite ein von dem Druckkörper beabstandet angeordnetes, begehbares Oberdeck auf. Bei der Herstellung dieser Unterseeboote in der Schiffbauhalle oder beim bzw. nach dem Aufslippen des Unterseeboots ist es üblich, auf dem Oberdeck befindliche Personen vor einem Herunterfallen von dem Unterseeboot zu sichern. Hierzu werden an dem Oberdeck des Unterseeboots Geländer angebracht, die anschließend wieder von dem Unterseeboot entfernt werden können. Zur Befestigung der Geländer an dem Oberdeck ist es bekannt, an der unterhalb des Oberdecks befindlichen Stahlstruktur des Unterseeboots Befestigungspunke vorzusehen, an denen die Geländerpfosten, d. h. die Vertikalstreben der Geländer befestigt werden können. Es hat sich gezeigt, dass hierbei die festgelegten Positionen der Geländerpfosten mit der Anordnung von außerhalb des Unterseeboots zu dem Oberdeck führenden Laufstegen kollidieren können.

Vor diesem Hintergrund liegt der Erfindung die Aufgabe zugrunde, ein Unterseeboot zu schaffen, bei dem die Ausgestaltung eines auf dem Oberdeck anzubringenden Geländers flexibel veränderbar ist.

Gelöst wird diese Aufgabe durch ein Unterseeboot mit den in Anspruch 1 angegebenen Merkmalen. Vorteilhafte Weiterbildungen dieses Unterseeboots ergeben sich aus den Unteransprüchen, der nachfolgenden Beschreibung sowie der Zeichnung. Hierbei können die in den Unteransprüchen und der Beschreibung angegebenen Merkmale gemäß der Erfindung jeweils für sich, aber auch in Kombination, die erfindungsgemäße Lösung gemäß Anspruch 1 weiter ausgestalten.

Bei dem erfindungsgemäßen Unterseeboot handelt es sich vorzugsweise um ein militärisches Unterseeboot. Dieses weist in üblicher Weise einen Druckkörper und oberhalb des Druckkörpers ein begehbares Oberdeck auf, das in einem Bereich bugseitig eines Turms des Unterseeboots und/oder in einem Bereich heckseitig des Turms ausgebildet sein kann. Das Oberdeck ist mit Abstand zu dem Druckkörper angeordnet und bevorzugt aus einem Faserverbundmaterial wie beispielsweise GFK oder CFK ausgebildet. Des Weiteren weist das Unterseeboot ein bei Bedarf an dem Oberdeck befestigbares Geländer mit mindestens einem, vorteilhafterweise aber mehreren Geländerpfosten auf.

Gemäß der Erfindung ist oberdeckseitig mindestens eine Führungsschiene vorgesehen. Diese Führungsschiene verläuft vorzugsweise in Längsrichtung des Oberdecks. In die Führungsschiene ist der Geländerpfosten bzw. sind die Geländerpfosten einführbar und festlegbar. D. h., an dem Oberdeck wird mindestens eine Führungsschiene zur Verfügung gestellt, an der die Geländerpfosten eines an dem Oberdeck anzubringenden Geländers bezogen auf die Längsausdehnung der Führungsschiene in eine beliebige Position verschoben werden können und anschließend dort befestigt werden können. Demnach ist das Geländer variabel gestaltbar und kann schnell und einfach z. B. an die Gegebenheiten in einer Schiffbauhalle angepasst werden. Zweckmäßigerweise sind an dem Oberdeck mindestens zwei Führungsschienen vorgesehen, die den begehbaren Bereich des Oberdecks in Längsrichtung einschließen, so dass an dem Oberdeck mindestens zwei Geländer befestigt werden können, die den begehbaren Bereich des Oberdecks außen umrahmen.

Die Führungsschiene wird vorteilhaft von einer hinterschnittenen Nut gebildet. D.h., als Führungsschiene für den zumindest einen Geländerpfosten wird bevorzugt eine Nut verwendet, deren Breite sich ausgehend von der offenen Seite der Nut unter Bildung einer Hinterschneidung erweitert. Bei dieser Ausgestaltung der Nut ist der in die Nut eingeführte Geländerpfosten bei einer entsprechenden Ausgestaltung des in die Nut eingreifenden Abschnitts des Geländerpfostens in allen Richtungen quer zur Längsausdehnung der Führungsschiene formschlüssig festgelegt, wobei vor einer Befestigung des Geländerpfostens an der Führungsschiene Bewegungen des Geländerpfosten in Längsrichtung der Führungsschiene möglich sind, so dass der Geländerpfosten an der gewünschten Stelle der Führungsschiene positioniert werden kann. Das Einführen des Geländerpfostens in die Nut kann an einem Längsende der Nut oder in eine Öffnung in der Nut erfolgen. Zweckmäßigerweise erfolgt das Einführen des Geländerpfostens in die Nut allerdings an der offenen Seite der Nut, wobei dort bevorzugt einer erweiterte Öffnung ausgebildet ist, deren Querschnitt mit dem größten Querschnitt des in die Nut einzuführenden Abschnitts des Geländerpfostens korrespondiert.

Der Geländerpfosten ist bevorzugt zweiteilig ausgebildet und weist ein in die Führungsschiene einführbares Führungselement und einen daran befestigbaren Pfostenkörper auf. Der Pfostenkörper ist zweckmäßigerweise derart an dem Führungselement befestigbar, dass er bei in die Führungsschiene eingreifendem Führungselement vollständig außerhalb der Führungsschiene angeordnet ist. Die zweiteilige Ausbildung des Geländerpfostens ermöglicht ein einfaches Positionieren des Geländerpfostens an dem Oberdeck. Hierzu wird zunächst nur das Führungselement in die Nut eingeführt und an die gewünschte Position verschoben. Danach wird der Pfostenkörper an dem Führungselement befestigt und der Geländerpfosten gegen ein weiteres Verschieben in der Führungsschiene festgelegt.

Zur Bildung des Formschlusses in der die Führungsschiene bildenden Nut weist das Führungselement vorzugsweise an einem Ende einen Führungskörper in Form einer Verdickung auf. Diese Verdickung weist zweckmäßigerweise einen Querschnitt auf, der im Wesentlichen dem Nutquerschnitt der Führungsschiene unterhalb der daran ausgebildeten Hinterschneidung entspricht. Durch den Führungskörper ist vorteilhaft ein an dem Führungskörper befestigter Gewindebolzen geführt, der bei Eingriff des Führungselements in die Führungsschiene aus der Führungsschiene herausragt. Die Befestigung des Gewindebolzens an dem Führungskörper erfolgt vorteilhaft mittels einer Schraubverbindung. Hierbei ist der Führungskörper vorzugsweise zwischen zwei auf dem Gewindebolzen geschraubten Muttern verspannt. Der aus der Führungsschiene herausragende Bereich des Gewindebolzens dient zur Befestigung des Pfostenkörpers, der vorzugsweise unmittelbar mit dem Gewindebolzen verschraubbar ist.

Grundsätzlich kann die Führungsschiene direkt an dem Oberdeck ausgebildet sein. So kann an dem Oberdeck die Führungsschiene bildende Nut zur Aufnahme eines Endbereichs des Geländepfostens bzw. zur Aufnahme eines Führungselements des Geländepfostens ausgebildet sein. Allerdings geht eine an dem Oberdeck direkt ausgebildete Führungsschiene in der Regel mit einer strukturellen Schwächung des Oberdecks einher. Insofern wird eine Ausgestaltung bevorzugt, bei der die Führungsschiene an der Oberseite des Oberdecks angeordnet ist. Demzufolge ist die Führungsschiene vorzugsweise ein separates Bauteil, das außenseitig des Oberdecks auf diesem angeordnet ist.

Damit sich eine an der Oberseite des Oberdecks angeordnete Führungsschiene nicht nachteilig auf die Strömungs- oder Signatureigenschaften des Unterseeboots auswirkt, ist es von Vorteil, die Führungsschiene an der Oberseite des Oberdecks in dem Oberdeck zu integrieren. In diesem Zusammenhang ist eine Ausgestaltung bevorzugt, bei der an der Oberseite des Oberdecks mindestens eine Vertiefung zur Aufnahme der Führungsschiene ausgebildet ist. Die Vertiefung weist zweckmäßigerweise eine Querschnittskontur auf, die mit der Querschnittskontur der Führungsschiene korrespondiert, wobei die Oberseite der Führungsschiene mit der Oberseite des Oberdecks unter Bildung einer glatten Oberfläche fluchtet. Vorzugsweise ist die Vertiefung muldenförmig gewölbt ausgebildet.

Die Vertiefung zur Aufnahme der Führungsschiene kann durch Materialabtrag an der Oberseite des Oberdecks geschaffen werden. Dies hat aber in der Regel eine Schwächung der Tragfähigkeit des Oberdecks zur Folge. Insbesondere bei einem aus einem Faserverbundmaterial ausgebildeten Oberdeck wird die Vertiefung daher besonders vorteilhaft durch eine Verformung eines das Oberdeck bildenden Flachmaterials gebildet. Folglich kann an dem das Oberdeck bildenden Flachmaterial, das vorzugsweise aus mehreren übereinander angeordneten Laminatlagen aus Faserverbundmaterial ausgebildet ist, eine auf den Druckkörper des Unterseeboots gerichtete Ausbeulung ausgebildet sein, welche die Vertiefung bildet, ohne dass eine der Laminatlagen zur Bildung der Vertiefung eingeschnitten werden muss.

Die Führungsschiene wird vorteilhaft von einem in einem Faserverbundmaterial eingebetteten, in Längsrichtung geschlitzten Rohr gebildet. Diese Führungsschiene kann in einer an dem Oberdeck ausgebildeten Vertiefung eingeklebt sein. Das Rohr der Führungsschiene ist vorzugsweise um seinen gesamten Umfang mit dem Faserverbundmaterial umgeben und bevorzugt ebenfalls aus Faserverbundmaterial ausgebildet. An dem das Rohr umgebenden Faserverbundmaterial ist der Bereich direkt außenseitig des an dem Rohr ausgebildeten Schlitzes korrespondierend geschlitzt ausgebildet.

Ein an einem in das Rohr einzuführenden Führungselement ausgebildeter Führungskörper weist zweckmäßigerweise einen maximalen Querschnitt auf, der mit dem Innenquerschnitt des Rohrs derart korrespondiert, dass der Führungskörper in dem Rohr mit geringem Spiel verschoben werden kann. Bevorzugt hat der Führungskörper die Form eines Kugelsegments. Dieses Kugelsegment ist bevorzugt aus einem Kunststoffmaterial mit guten Gleiteigenschaften wie z. B. Polyethylen (PE) oder Polytetrafluorethylen (PTFE) ausgebildet.

Wie bereits angemerkt, sind bei einer zweiteiligen Ausbildung des Geländerpfostens das Führungselement und der Pfostenkörper miteinander verschraubt. Insbesondere bei einer Ausgestaltung, bei der eine an dem Führungselement ausgebildete Verdickung von einem kugelförmigen oder kugelsegmentförmigen Führungskörper gebildet wird, welches in einem Rohr verschiebbar ist, ist zu gewährleisten, dass sich das Führungselement beim Aufschrauben des Pfostenkörpers auf den Gewindebolzen des Führungselements nicht relativ zu dem Pfostenkörper verdrehen kann. Zu diesem Zweck ist vorteilhaft vorgesehen, dass auf dem Gewindebolzen des Führungselements eine in den Schlitz der Führungsschiene eingreifende Verdrehsicherung befestigt ist. Die Verdrehsicherung ist zweckmäßigerweise derart ausgebildet, dass sie einen eine Drehbewegung des Führungselements verhindernden Formschluss zwischen der Führungsschiene und dem darin eingreifenden Führungselement schafft. Konstruktiv einfach bildet eine Mutter zum Befestigen des Gewindebolzens an dem Führungskörper die Verdrehsicherung.

Nachfolgend ist die Erfindung anhand eines in der Zeichnung dargestellten Ausführungsbeispiels näher erläutert. In der Zeichnung zeigt:
- Fig. 1: schematisch stark vereinfacht ein Unterseeboot in einer Draufsicht,
- Fig. 2: schematisch vereinfacht ein Außenhautsegment, welches einen Teil des Oberdecks des Unterseeboots nach Fig. 1 bildet,
- Fig. 3: das Außenhautsegment nach Fig. 2 in einer Draufsicht,
- Fig. 4: eine Schnittansicht entlang der Schnittlinie IV-IV in Fig. 3,
- Fig. 5: eine Schnittansicht entlang der Schnittlinie V-V in Fig. 3,
- Fig. 6: eine Schnittansicht entlang der Schnittlinie VI-VI in Fig. 3,
- Fig. 7: eine vereinfacht dargestellte Einzelheit A aus Fig. 5 und
- Fig. 8: die Darstellung nach Fig. 7 in einer Schnittansicht entlang der Schnittlinie VIII-VIII in Fig. 7.

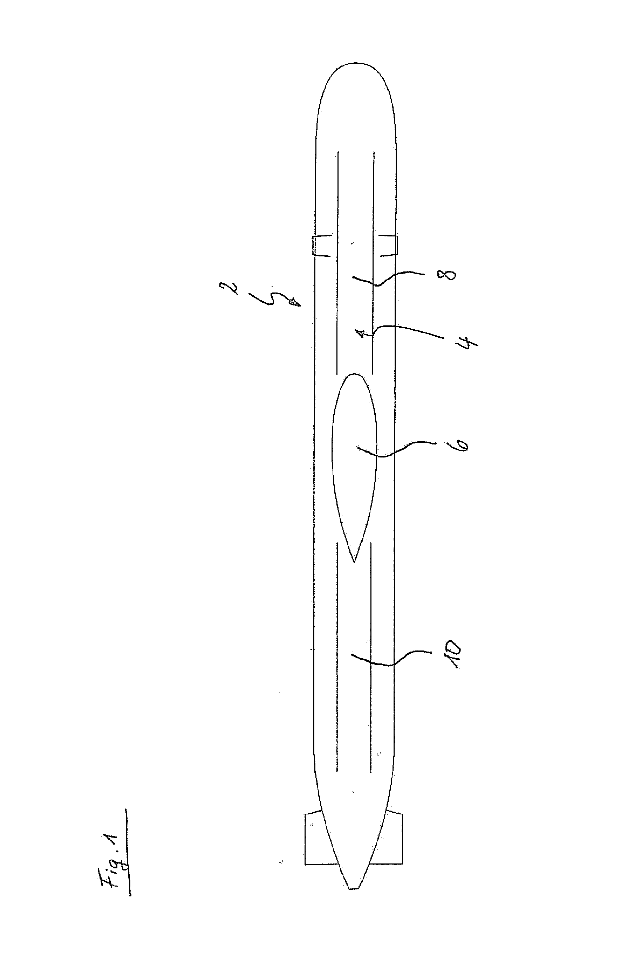

Das in Fig. 1 dargestellte Unterseeboot 2 ist an seiner Oberseite von einer Außenhaut umgeben. Diese Außenhaut bildet ein von einem Druckkörper des Unterseeboots 2 beabstandetes begehbares Oberdeck 4 mit einem bugseitig eines an der Oberseite des Unterseeboots 2 angeordneten Turms 6 angeordneten Oberdeckbereich 8 und mit einem heckseitig des Turms 6 angeordneten Oberdeckbereich 10.

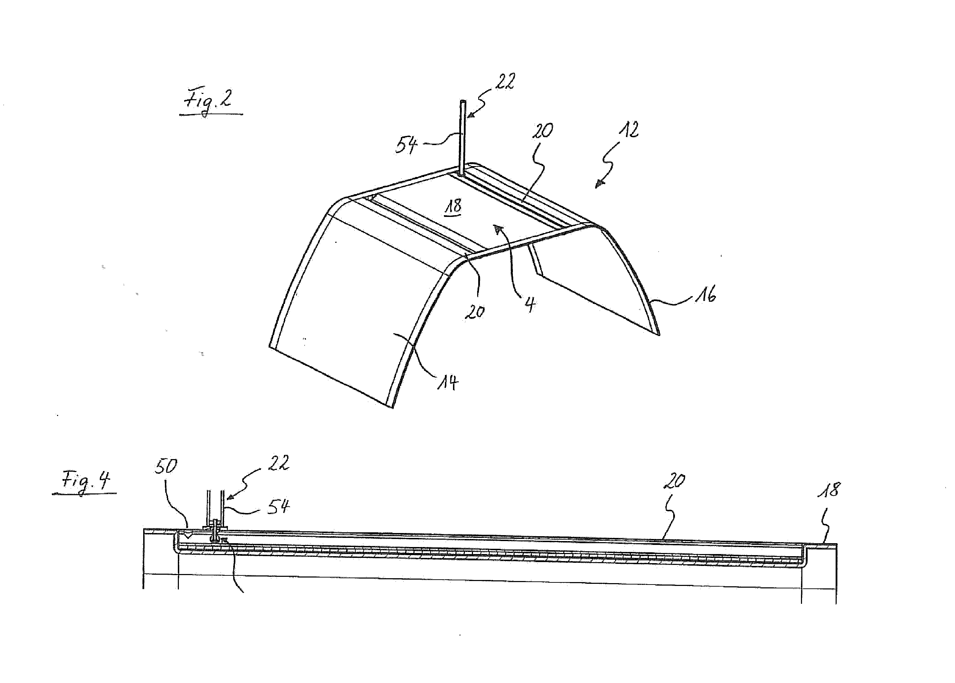

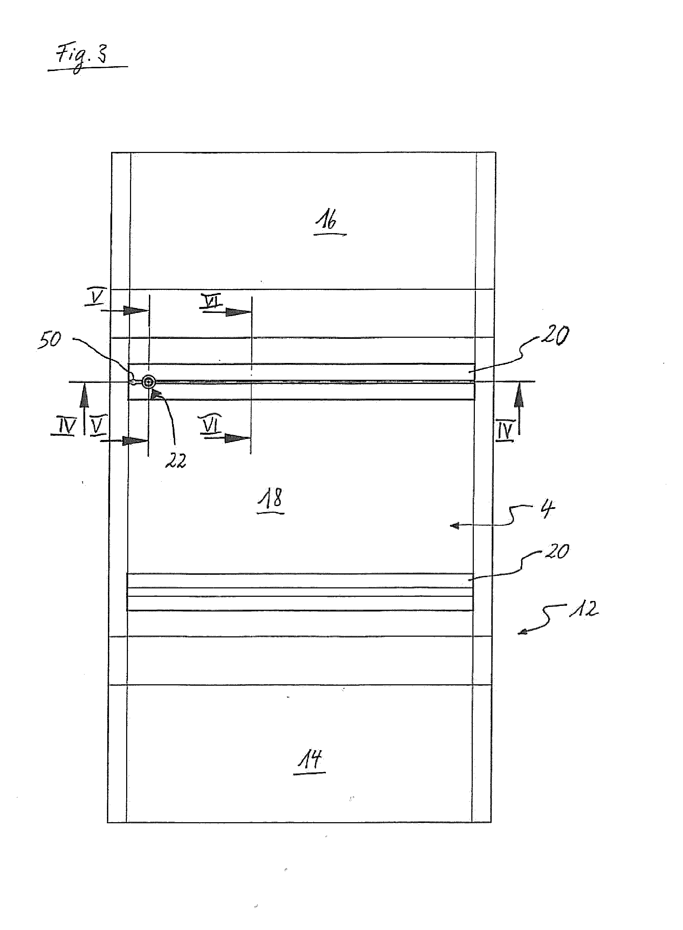

Sowohl der Oberdeckbereich 8 als auch der Oberdeckbereich 10 wird von mehreren nebeneinander angeordneten Außenhautsegmenten 12 gebildet. Eines dieser Außenhautsegmente 12 ist in den Fig. 2 und 3 dargestellt. Die Außenhautsegmente 12 sind aus einem Flachmaterial aus glasfaserverstärktem Kunststoff ausgebildet und weisen zwei schräg aufeinander zulaufende Abschnitte 14 und 16 auf, zwischen denen ein Abschnitt 18 angeordnet ist, der einen Teilbereich des Oberdecks 4 bildet.

An der Oberseite des Abschnitts 18 sind zwei Führungsschienen 20 angeordnet. Diese Führungsschienen 20 sind parallel zueinander ausgerichtet und erstrecken sich im Wesentlichen über die gesamte Länge des Abschnitts 18. Zwischen den beiden Führungsschienen 20 befindet sich der begehbare Bereich des Oberdecks 4. In die Führungsschienen 20 sind Geländerpfosten 22 eines bei Bedarf an dem Oberdeck 4 anzubringenden Geländers einführbar und in den Führungsschienen 20 festlegbar. In den Führungsschienen 20 sind dort eingeführte Geländerpfosten 22 in eine beliebige Position verschiebbar und dort festlegbar. In der Zeichnung nicht dargestellt, kann an den von dem Oberdeck abgewandten Enden der Geländerpfosten 22 ein Handlauf angeordnet sein. Dieser Handlauf kann beispielsweise von einem Seil gebildet werden.

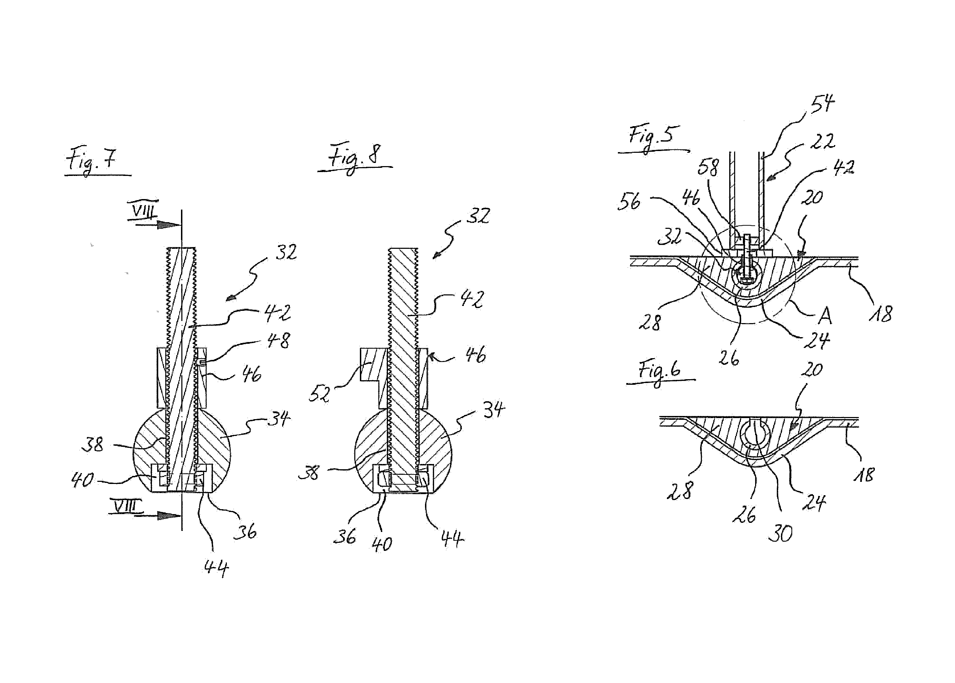

Wie aus den Fig. 5 und 6 deutlich wird, sind die Führungsschienen 20 in an dem Abschnitt 18 ausgeformten muldenförmigen Vertiefungen 24 angeordnet und dort mit dem Abschnitt 18 verklebt. Die Führungsschienen 20 werden jeweils von einem Rohr 26 gebildet, das in einem Körper 28 eingebettet ist, dessen Querschnittskontur mit der Querschnittskontur der Vertiefung 24 korrespondiert. Das Rohr 26 sowie der Körper 28 sind aus glasfaserverstärktem Kunststoff ausgebildet. An dem Rohr 26 ist an der von der Vertiefung 24 abgewandten Seite ein Schlitz 30 ausgebildet. Dieser Schlitz 30 erstreckt sich auch durch den Körper 28 bis zu einer äußeren Flachseite des Körpers 28, die mit der Außenoberfläche des Abschnitts 18 außerhalb der Vertiefung 24 fluchtet.

Das Rohr 26 sowie der Schlitz 30 dienen zur Aufnahme eines in den Fig. 7 und 8 vergrößert dargestellten Führungselements 32 des Geländerpfostens 22. Das Führungselement 32 weist einen Führungskörper 34 auf. Der Führungskörper 34 ist kugelsegmentförmig mit einer Flachseite 36 ausgebildet. Normal zu der Flachseite 36 verläuft durch den Führungskörper 34 eine Durchbrechung 38. Ein an die Flachseite 36 angrenzender Abschnitt 40 der Durchbrechung 38 ist absatzförmig erweitert. Durch die Durchbrechung 38 ist ein Gewindebolzen 42 geführt, der an der von der Flachseite 36 abgewandten Seite aus dem Führungskörper 34 herausragt. Der Gewindebolzen 42 ist an den Führungskörper 34 mittels einer auf dem Gewindebolzen in dem Abschnitt 40 der Durchbrechung 38 geschraubten Mutter 44 und einer an der von der Flachseite 36 abgewandten Seite des Führungskörpers 34 angreifenden Mutter 46 befestigt. Die Position der aufgeschraubten Mutter 46 wird mit einer Stiftschraube 48 gesichert.

Über eine an der Flachseite der Führungsschiene 20 ausgebildetes Rundloch 50 (siehe Fig. 3 und 4) ist das Führungselement 32 in die Führungsschiene 20 einführbar. Zu diesem Zweck weist das Rundloch 50 einen mit dem maximalen Durchmesser des Führungskörpers 34 korrespondierenden Durchmesser auf. Ausgehend von der Öffnung 50 wird das Führungselement 32 in der Führungsschiene 20 in die gewünschte Position verschoben. Hierbei greift die Mutter 46 in den an dem Rohr 26 sowie an dem Körper 28 ausgebildeten Schlitz 30 ein. In einem von dem Führungskörper 34 abgewandten Abschnitt 52 ist der Querschnitt der Mutter 46 in eine Richtung erweitert und weist ein Maß auf, das größer als die Breite des Schlitzes 30 an der Führungsschiene 20, aber geringer als der maximale Durchmesser des Führungskörpers 34 ist. Aufgrund dieser Ausgestaltung wirkt die Mutter 46 als eine Verdrehsicherung für das Führungselement 32.

Ein an der Flachseite der Führungsschiene 20 aus dem Schlitz 30 herausragender Abschnitt des Gewindebolzens 42 des Führungselements 32 dient zur Befestigung eines Pfostenkörpers 54 des Geländerpfostens 22 an dem Führungselement 32. Der Pfostenkörper 54 wird von einem Rohr gebildet. An einem Ende des Pfostenkörpers 54 ist eine Ringscheibe 56 befestigt, die über den Außendurchmesser des Pfostenkörpers 54 radial auskragt. Die Ringscheibe 56 bildet eine Auflagefläche des an dem Führungselement 32 befestigten Pfostenkörpers 54 auf der Flachseite der Führungsschiene 20. Zur Befestigung des Pfostenkörpers 54 an dem Führungselement 32 ist in dem Innenvolumen des Pfostenkörpers 54 unmittelbar hinter der Ringscheibe 56 eine Scheibe 58 mit einer zentral angeordneten Gewindebohrung befestigt. Die Gewindebohrung der Scheibe 58 korrespondiert mit dem Gewinde des Gewindebolzens 52. Auf diese Weise ist der Pfostenkörper 54 mit dem Führungselement 32 verschraubbar.

### Bezugszeichenliste

- 2 -: Unterseeboot
- 4 -: Oberdeck
- 6 -: Turm
- 8 -: Oberdeckbereich
- 10 -: Oberdeckbereich
- 12 -: Außenhautsegment
- 14 -: Abschnitt
- 16 -: Abschnitt
- 18 -: Abschnitt
- 20 -: Führungsschiene
- 22 -: Geländerpfosten
- 24 -: Vertiefung
- 26 -: Rohr
- 28 -: Körper
- 30 -: Schlitz
- 32 -: Führungselement
- 34 -: Führungskörper
- 36 -: Flachseite
- 38 -: Durchbrechung
- 40 -: Abschnitt
- 42 -: Gewindebolzen
- 44 -: Mutter
- 46 -: Mutter
- 48 -: Stiftschraube
- 50 -: Rundloch
- 52 -: Abschnitt
- 54 -: Pfostenkörper
- 56 -: Ringscheibe
- 58 -: Scheibe
- A -: Einzelheit

## Patentansprüche

1. Unterseeboot, insbesondere militärisches Unterseeboot, mit einem oberhalb eines Druckkörpers angeordneten Oberdeck (4) und mit mindestens einem an dem Oberdeck (4) lösbar befestigbaren Geländerpfosten (22) eines Geländers, **dadurch gekennzeichnet, dass** oberdeckseitig mindestens eine Führungsschiene (20) vorgesehen ist, in der der Geländerpfosten (22) einführbar und festlegbar ist.

2. Unterseeboot nach Anspruch 1, **dadurch gekennzeichnet, dass** die Führungsschiene (20) von einer hinterschnittenen Nut gebildet wird.

3. Unterseeboot nach einem der vorangehenden Ansprüche, **dadurch gekennzeichnet, dass** der Geländerpfosten (22) zweigeteilt ausgebildet ist und ein in die Führungsschiene (20) einführbares Führungselement (32) und einen daran befestigbaren Pfostenkörper (54) aufweist.

4. Unterseeboot nach Anspruch 3, **dadurch gekennzeichnet, dass** das Führungselement (32) vorzugsweise an seinem Ende einen Führungskörper (34) in Form einer Verdickung aufweist, durch die ein an dem Führungskörper (34) befestigter Gewindebolzen (42) geführt ist, der bei Eingriff des Führungselements (32) in die Führungsschiene (20) aus dieser herausragt.

5. Unterseeboot nach einem der vorangehenden Ansprüche, **dadurch gekennzeichnet, dass** die Führungsschiene (20) an der Oberseite des Oberdecks (4) angeordnet ist.

6. Unterseeboot nach einem der vorangehenden Ansprüche, **dadurch gekennzeichnet, dass** an der Oberseite des Oberdecks (4) mindestens eine Vertiefung (24) zur Aufnahme der Führungsschiene (20) ausgebildet ist.

7. Unterseeboot nach Anspruch 6, **dadurch gekennzeichnet, dass** die Vertiefung (24) durch eine Verformung eines das Oberdeck (4) bildenden Flachmaterials gebildet wird.

8. Unterseeboot nach einem der vorangehenden Ansprüche, **dadurch gekennzeichnet, dass** die Führungsschiene (20) von einem in einem Faserverbundmaterial eingebetteten, in Längsrichtung geschlitzten Rohr (26) gebildet wird.

9. Unterseeboot nach einem der Ansprüche 4 bis 8, **dadurch gekennzeichnet, dass** auf dem Gewindebolzen (42) des Führungselements (32) eine in den Schlitz (30) der Führungsschiene (20) eingreifende Verdrehsicherung befestigt ist.

10. Unterseeboot nach Anspruch 9, **dadurch gekennzeichnet, dass** eine Mutter (46) zum Befestigen des Gewindebolzens (42) an dem Führungskörper (34) die Verdrehsicherung bildet.

11. Unterseeboot nach einem der Ansprüche 3 bis 10, **dadurch gekennzeichnet, dass** der Geländerpfosten (22) durch Verschraubung des Pfostenkörpers (54) mit dem Führungselement (32) an der Führungsschiene (20) verspannt ist.
